# EUROPEAN PATENT APPLICATION

(11) **EP 4 624 668 A1**
(43) Date of publication of application: **01.10.2025**
(21) Application number: 24305481.4
(22) Date of filing: 28.03.2024
(51) Int. Cl.: E02B 17/00, E02B 17/02

(54) **INSTALLATION FOR PRODUCING OFFSHORE ELECTRICITY COMPRISING A WIND TURBINE, A JACKET STRUCTURE AND A VERTICALLY SUPPORTED MONOPILE**

(71) Applicant: TotalEnergies OneTech, 92400 Courbevoie (FR)
(72) Inventor: VACCARONE, Stefano, 92400 Courbevoie (FR)
(74) Representative: Lavoix

(57) **Abstract**

Installation (10) for producing offshore electricity comprising:
- a wind turbine (12),
- a monopile (14) extending along a vertical direction (V) for supporting the wind turbine,
- a jacket structure (16) submerged in a body of water (18).

The jacket structure comprises:
- N outer supports (24) around the vertical direction, lying on or anchored in a seabed (26), with N ≥ 3,
- a support (28) located above the seabed, for vertically receiving and supporting a lower extremity (30) of the monopile, the support comprising a lower collar (32) surrounding the lower extremity,
- an upper collar (34) vertically aligned with the support and adapted for surrounding the monopile.

The monopile is adapted for being moved in the upper collar until the lower extremity is received in the support. The jacket structure is adapted for resisting bending moments (M) applied by the monopile via the support and the upper collar.

## Description

### FIELD

The present invention deals with an installation for producing offshore electricity comprising a wind turbine.

It also deals with a method of building such an installation.

### BACKGROUND

Bottom fixed offshore wind turbines are being installed in deeper and deeper water depths.

For shallow water depths, monopiles are recognized by the offshore wind industry as an optimal bottom-fixed concept for serial installation of wind turbines, and are therefore preferred whenever possible. However, in deeper waters, the required dimensions and weights of the monopiles are increased, causing difficulties for onshore fabrication, handling, transport to the offshore site, and installation by either driving or drilling/grouting.

As a result, in order to keep them cost-effective, monopiles are limited to shallow areas, and are generally less competitive with respect to jackets above 40m water depths, depending on soil and local weather conditions.

Truss jacket structures for offshore wind turbines are made of steel tubes welded together and which generally have a typical diameter between 0.5 and 2.5 m. The wind turbine is fixed to the jacket structure using a transition piece. Jacket structures are able to withstand large efforts both horizontally and vertically, and allow accessing large water depths. However, jacket structures are usually tailor made and their manufacturing time is quite long. A full windfarm using classical jacket structures is thus challenging to build.

An aim of the invention is to reduce the manufacturing and erection time of an installation for producing offshore electricity, without increasing the costs, in situations where classical jacket structures are generally used, because monopiles would be too large to be produced and/or too expensive.

### SUMMARY OF THE INVENTION

To this end, the invention proposes an installation for producing offshore electricity comprising:
- a wind turbine;
- a monopile intended to extend along a vertical direction and adapted for supporting the wind turbine, and;
- a truss jacket structure intended to be fully submerged in a body of water, the jacket structure comprising;
- N outer supports distributed around the vertical direction and adapted for lying on or being anchored in a seabed, N being an integer equal to or greater than three;
- a support located above the seabed, and adapted for vertically receiving and supporting a lower extremity of the monopile, the support comprising a lower collar adapted for surrounding the lower extremity around the vertical direction, and;
- an upper collar vertically aligned with the support and adapted for surrounding the monopile around the vertical direction;

the monopile being adapted for being vertically moved in the upper collar until the lower extremity is received in the support;
the jacket structure being adapted for resisting bending moments intended to be applied by the monopile via the support and the upper collar.

In other embodiments, the installation may comprise one or several of the following features, taken in isolation or any technically feasible combination:
- N is equal to three or four, and is preferably equal to three;
- the N outer supports include caissons comprising a ballast material;
- the jacket structure comprises at least N steel tubes respectively protruding upwards from the N outer supports and comprising a ballast material;
- each of the outer supports includes a suction bucket or a penetrating skirt penetrating into the seabed, or at least one pin pile;
- the jacket structure comprises a first plurality of N tubes connecting the N outer supports to each other successively around the vertical direction;
- the jacket structure comprises N nodes distributed around the vertical direction in a horizontal plane;
- the jacket structure comprises a second plurality of N tubes respectively connecting the N nodes to the N outer supports;
- the jacket structure comprises a third plurality of N tubes respectively connecting the support downwards to the N outer supports or to lower parts of the N tubes of the second plurality;
- the jacket structure comprises a fourth plurality of N tubes respectively connecting the support upwards to the N nodes;
- the jacket structure comprises a fifth plurality of N tubes connecting the N nodes to each other successively around the vertical direction;
- the jacket structure comprises a sixth plurality of N tubes respectively connecting the upper collar downwards to the N node;
- the second plurality of N tubes, the third plurality of N tubes, the fourth plurality of N tubes and the sixth plurality of N tubes extend in N vertical planes;
- the N tubes of the second plurality are vertical;
- the jacket structure defines N lower faces delimited by two tubes of the second plurality of N tubes and one of the tubes of the fifth plurality of N tubes, each of the N lower faces including two of the N nodes and comprising two braces forming an "X"; and
- the monopile is fixed to the support and/or to the upper collar.

The invention also proposes a process of building such an installation in a construction site, comprising:
- submerging the jacket structure in the body of water at the construction site, the N outer supports lying on or being anchored in the seabed;
- introducing the monopile in the upper collar, and moving the monopile vertically with respect to the upper collar until the lower extremity is vertically received in the support, the lower collar surrounding the lower extremity around the vertical direction and the lower extremity being supported by the support; and
- fixing the wind turbine to the monopole.

In other embodiments, the process may comprise one or several of the following features, taken in isolation or any technically feasible combination:
- the process comprises fixing the monopile to the support and/or to the upper collar;
- the process comprises inserting a ballast material in the outer supports;
- the process comprises inserting a ballast material in N tubes of the jacket structure respectively protruding upwards from the N outer supports.

### BRIEF DESCRIPTION OF THE DRAWINGS

The disclosure and its advantages will be better understood upon reading the following description, given solely by way of example and with reference to the appended drawings, in which:
- Figure 1 is a schematic perspective view partially representing an installation according to the invention,
- Figure 2 is a schematic upper view of the jacket structure shown in Figure 1,
- Figure 3 is a schematic view partially representing the jacket structure shown in Figures 1 and 2 in a vertical plane, and
- Figure 4 is a schematic perspective view partially representing an installation according to a variant of the installation shown in Figures 1 to 3.

### DETAILED DESCRIPTION

### Installation

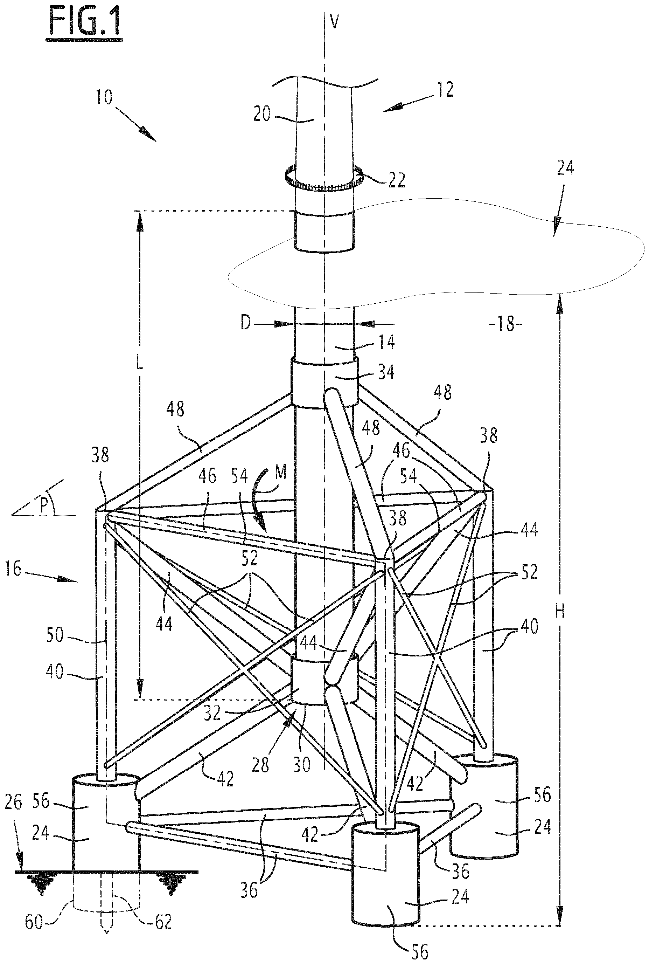

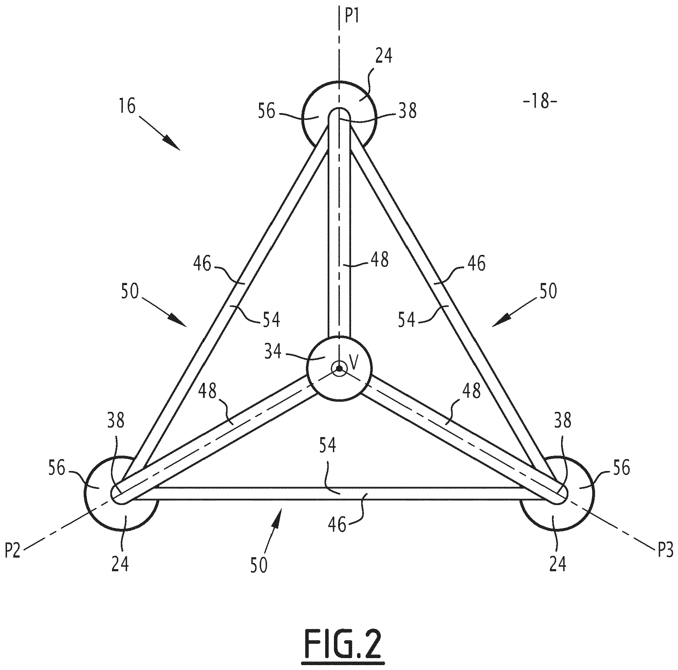

With reference to Figures 1 to 3, an installation 10 according to the invention will be described.

The installation 10 comprises a wind turbine 12 (partially represented), a monopile 14 extending along a vertical direction V and supporting the wind turbine, and a truss jacket structure 16 fully submerged in a body of water 18.

The wind turbine 12 is adapted for producing electricity. The wind turbine 12 comprises a mast 20 fixed to the monopile, and advantageously a platform 22 located above a surface 24 of the body of water 18.

The body of water 18 is for example an ocean, a sea or a lake. The body of water 18 for example has a depth H of 80 to 120 meters.

The monopile 14 is adapted for fully supporting the wind turbine 12.

The monopile 14 is advantageously tubular, and for example has a diameter D comprised between 7 and 13 meters.

The monopile 14 for example has a length L comprised between 70 and 120 meters. In a particular embodiment, the monopile 14 is fixed to the jacket structure 16.

### Jacket structure

The jacket structure 16 comprises N outer supports 24 distributed around the vertical direction V and for example adapted for lying on a seabed 26.

N is an integer equal to or greater than three.

In the example, N equals three. Four is a possible, however less preferred, value for N. As variants (not shown), N is greater than four.

The jacket structure 16 comprises a support 28 located above the seabed 26, and adapted for vertically receiving and supporting a lower extremity 30 of the monopile 14, the support comprising a lower collar 32 adapted for surrounding the lower extremity around the vertical direction V. The jacket structure 16 comprises an upper collar 34 vertically aligned with the support 28 and adapted for surrounding the monopile 14 around the vertical direction V.

The monopile 14 does not penetrate into the seabed 26.

The jacket structure 16 is adapted for resisting bending moments M applied by the monopile 14 via the support 28 and the upper collar 34 during operation.

The jacket structure 16 advantageously comprises a first plurality of N tubes 36 connecting the N outer supports 24 to each other successively around the vertical direction V.

The jacket structure 16 for example comprises N nodes 38 distributed around the vertical direction V in a horizontal plane P, and a second plurality of N tubes 40 respectively connecting the N nodes 38 to the N outer supports 24. The jacket structure 16 for example comprises a third plurality of N tubes 42 respectively connecting the support 28 downwards to the N outer supports 24, a fourth plurality of N tubes 44 respectively connecting the support 28 upwards to the N nodes 38, and a fifth plurality of N tubes 46 connecting the N nodes 38 to each other successively around the vertical direction V.

The jacket structure 16 for example comprises a sixth plurality of N tubes 48 respectively connecting the upper collar 34 downwards to the N nodes 38.

The jacket structure 16 advantageously defines N lower faces 50 delimited by two tubes 40 of the second plurality of N tubes and one of the tubes 46 of the fifth plurality of N tubes.

In particular embodiments, the upper collar 34 and/or the support 28 is/are fixed to the monopile 14, for example using sand or concrete.

In a particular embodiment, the monopile 14 remains free to move with respect to upper collar 34 after being installed.

In another particular embodiment, the monopile 14 remains free to move with respect to support 28 after being installed. However, the weight of the monopile 14 and of the wind turbine 12, taking into account potential buoyancy of the monopile, ensures that the lower extremity 30 of the monopile remains in the support 28 during operation.

The upper collar 34 is for example the uppermost part of the jacket structure 16.

The upper collar 34 and the lower collar 32 advantageously have a central position within the jacket structure 16 seen from above.

The N nodes 38 are for example formed by upper extremities of the N tubes 40.

Each of the N lower faces 50 advantageously includes two of the N nodes 38 and comprises two braces 52 forming an "X".

For example, each of the two braces 52 extends diagonally from one of said two of the N nodes 38 to a lower extremity of one of the N tubes 40, or to one the outer supports 24.

As a variant (not shown), each of the N lower faces 50 only include one brace 52, for example forming a diagonal of the lower face.

As another variant (not shown), the two braces 52 form an upside down "V". Each of the two braces 52 for example extend between, on the one hand, a middle point 54 of one of the tubes 46 of the fourth plurality and, on the other hand, said a lower extremity of one of the N tubes 40, or to one the outer supports 24

The second plurality of N tubes 40, the third plurality of N tubes 42, the fourth plurality of N tubes 44 and the sixth plurality of N tubes 48 for example extend in N vertical planes P1, P2, P3 respectively.

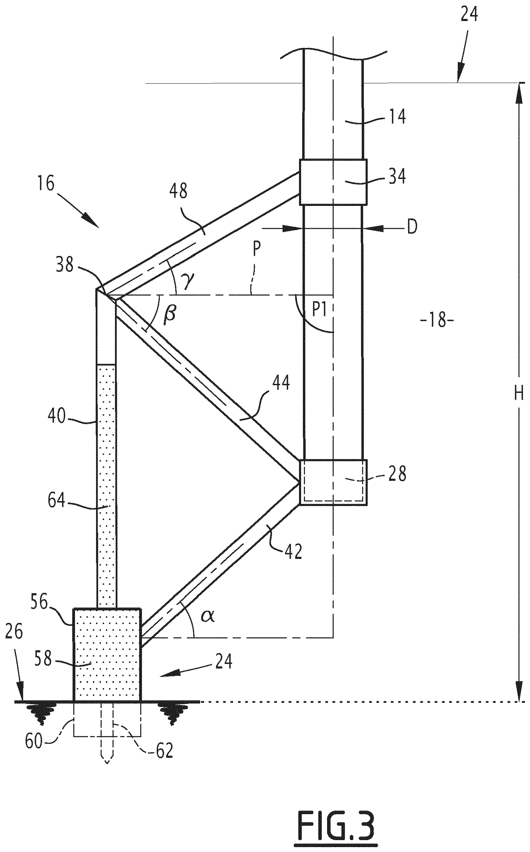

For example, the third plurality of N tubes 42, the fourth plurality of N tubes 44 and the sixth plurality of N tubes 48 define angles α β, γ (figure 3) with a horizontal plane P that are comprised between 30° and 60°, preferably between 40° and 50°, and more preferably approximately equal to 45°.

In the example, the N tubes 40 of the second plurality are vertical.

As a variant (not shown), the N tubes 40 of the second plurality are inclined upwards toward the vertical direction V.

All the above mentioned tubes 36, 40, 42, 44, 46, 48 of the jacket structure 16 for example comprise more than 90wt% of steel, and are advantageously made of steel. Their diameters are for example comprised between 0.8 and 4.0 meter.

### Outer supports

By "outer", it is meant that the outer supports 24 are away from the vertical direction V, so as to provide stability to the installation 10. In a particular embodiment, the outer supports 24 are the most distal structural elements in the jacket structure 16 with respect to the vertical direction V.

The outer supports 24 are advantageously at the same distance from the vertical direction V. For example, the outer supports 24 are regularly distributed around the vertical direction V. In the example, the outer supports 24 define angles of 360°/N with respect to the vertical direction V, i.e. 120° in the example.

The outer supports 24 for example include caissons 56 comprising a ballast material 58.

In the example, the outer supports 24 lie on the seabed 26.

As a variant or a complement, the outer supports 24 are anchored in the seabed 26. Indeed, each of the outer supports may include a suction bucket or a penetrating skirt 60 penetrating into the seabed, or at least one pin pile 62.

In the example, the N tubes 40 from the second plurality form N steel tubes respectively protruding upwards from the outer supports 24 and advantageously comprising a ballast material 64.

The ballast material 64 may be of the same nature as the ballast material 58, and both are advantageously put in place during a same filling step.

In a particular embodiment, the ballast material 58 and/or the ballast material 64 comprise(s) concrete. This advantageously reinforces the outer supports 24 and/or the N tubes 40, in particular nodes where the tubes 40, 42 and the braces 52 meet in the example.

As a variant (not shown), the ballast material 64 may extend upwards until the upper extremities of the N tubes 40 (the nodes 38 in the example). This advantageously reinforces the nodes 38.

### Building process

A process of building the installation 10 will now be described.

The jacked structure 16 may be towed to the construction site. The jacket structure 16 is fully submerged in the body the water 18 on the seabed, the N outer supports 24 lying on or being anchored in the seabed 26.

The ballast material 58 is advantageously inserted in the outer supports 24. Advantageously, the ballast material 64 is inserted in the N tubes 40.

The monopile 14 is transported to the construction site and introduced in the upper collar 34 (typically by a heavy lift vessel, not shown) and moved vertically with respect to the upper collar until the lower extremity 30 is vertically received in the support 28. The lower collar 32 surrounds the lower extremity 30 around the vertical direction V and the lower extremity is supported by the support 28. Optionally, the monopile 14 is fixed to the support 28 and/or to the upper collar 34.

The wind turbine 12 is transported to the construction site and fixed to the monopile 14.

In a particular embodiment, the monopile 14 is fixed to the support 28 and/or to the upper collar 34.

### Variant

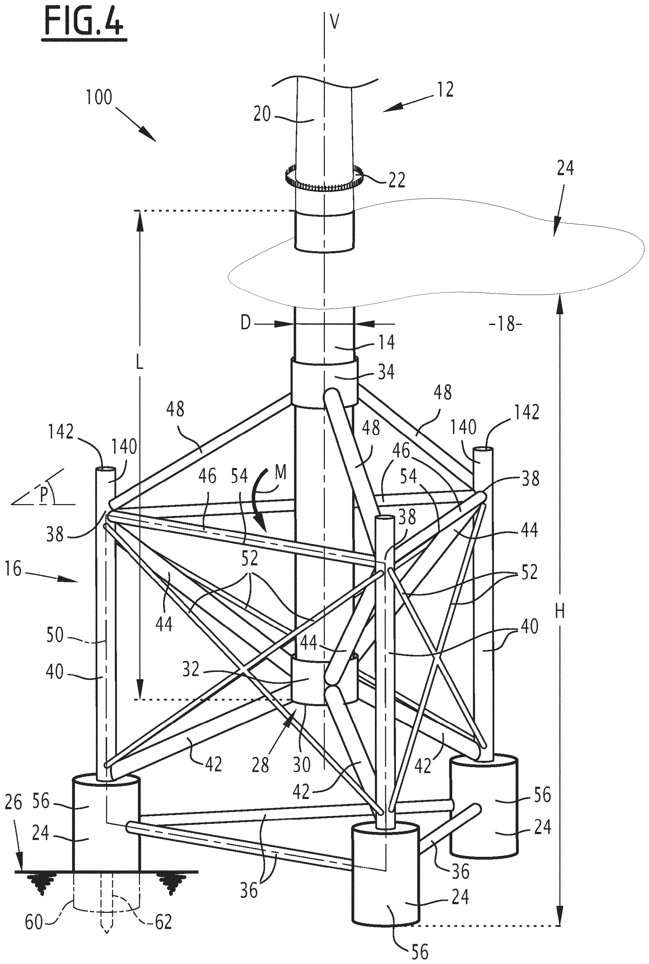

An installation 100 will now be described with reference to figure 4.

The installation 100 is analogous to the installation 10 shown in Figures 1 to 3. Similar elements bear the same numeral references and will not be described again. Only the differences will be described in detail hereafter.

In the installation 100, the N nodes 38 are not formed by the upper extremities of the N tubes 40. For example, the N tubes 40 comprise upper portions 140 extending above the N nodes 38. Advantageously, the upper portions 140 have upper extremities 142 defining openings that may be used for inserting the ballast material 58 and/or the ballast material 64. The ballast material 58 may extend up to the N nodes 38, or higher in the upper portions 140.

The N tubes 42 of the third plurality do not connect the support 28 downwards to the N outer supports 24 but to lower parts of the N tubes 40 of the second plurality.

### Advantages

Thanks to the above described features, the manufacturing and erection time of the installations 10, 100 is reduced. The jacket structure 16 is smaller than without a monopile 14 and fast to produce. The monopile 14 has a reasonable size and can relatively easily be introduced in the upper collar 34 before resting on the support 28.

The monopile 14 being vertically supported by the jacket structure 16, the monopile does not have to be inserted in the seabed 26. The monopile 14 is advantageously a standard piece of equipment compatible with the current supply chain capabilities.

The association of the jacket structure 16 and the monopile 14 allows installing the wind turbine 12 in water depths between 80 and 120 meters in a fast and reliable manner. Once installed, the jacket structure 16 and the monopile 14 resist the bending moments M created by the wind turbine 12.

Advantageously, in particular for marine fauna protection, noise is avoided or minimized during the offshore building of the installations 10, 100. Indeed the monopile 14 is vertically supported by the jacket structure 16, and does not have to be hammered into the seabed 26. Furthermore, if the outer supports 24 are made of suction buckets or penetrating skirts, no hammering is needed to install them.

## Claims

1. An installation (10; 100) for producing offshore electricity comprising:
- a wind turbine (12),
- a monopile (14) intended to extend along a vertical direction (V) and adapted for supporting the wind turbine (12), and
- a truss jacket structure (16) intended to be fully submerged in a body of water (18), the jacket structure (16) comprising:
- N outer supports (24) distributed around the vertical direction (V) and adapted for lying on or being anchored in a seabed (26), N being an integer equal to or greater than three,
- a support (28) located above the seabed (26), and adapted for vertically receiving and supporting a lower extremity (30) of the monopile (14), the support (28) comprising a lower collar (32) adapted for surrounding the lower extremity (30) around the vertical direction (V), and
- an upper collar (34) vertically aligned with the support (28) and adapted for surrounding the monopile (14) around the vertical direction (V),
the monopile (14) being adapted for being vertically moved in the upper collar (34) until the lower extremity (30) is received in the support (28),
the jacket structure (16) being adapted for resisting bending moments (M) intended to be applied by the monopile (14) via the support (28) and the upper collar (34).

2. The installation (10; 100) according to claim 1, wherein N is equal to three or four, and is preferably equal to three.

3. The installation (10; 100) according to claim 1 or 2, wherein the N outer supports (24) include caissons (56) comprising a ballast material (58).

4. The installation (10; 100) according to any one of claims 1 to 3, wherein the jacket structure (16) comprises at least N steel tubes (40) respectively protruding upwards from the N outer supports (24) and comprising a ballast material (64).

5. The installation (10; 100) according to any one of claims 1 to 4, wherein each of the outer supports (24) includes a suction bucket or a penetrating skirt (60) penetrating into the seabed (26), or at least one pin pile (62).

6. The installation (10; 100) according to any one of claims 1 to 5, wherein the jacket structure (16) comprises a first plurality of N tubes (36) connecting the N outer supports (24) to each other successively around the vertical direction (V).

7. The installation (10; 100) according to any one of claims 1 to 6, wherein the jacket structure (16) comprises:
- N nodes (38) distributed around the vertical direction (V) in a horizontal plane (P),
- a second plurality of N tubes (40) respectively connecting the N nodes (38) to the N outer supports (24),
- a third plurality of N tubes (42) respectively connecting the support (28) downwards to the N outer supports (24) or to lower parts of the N tubes (40) of the second plurality,
- a fourth plurality of N tubes (44) respectively connecting the support (28) upwards to the N nodes (38), and
- a fifth plurality of N tubes (46) connecting the N nodes to each other successively around the vertical direction (V).

8. The installation (10; 100) according to claim 7, wherein the jacket structure (16) comprises a sixth plurality of N tubes (48) respectively connecting the upper collar (34) downwards to the N nodes (38).

9. The installation (10; 100) according to claim 8, wherein the second plurality of N tubes (40), the third plurality of N tubes (42), the fourth plurality of N tubes (44) and the sixth plurality of N tubes (48) extend in N vertical planes (P1, P2, P3).

10. The installation (10; 100) according to claim 9, wherein the N tubes (40) of the second plurality are vertical.

11. The installation (10; 100) according to any one of claims 7 to 10, wherein the jacket structure (16) defines N lower faces (50) delimited by two tubes (40) of the second plurality of N tubes and one of the tubes (46) of the fifth plurality of N tubes, each of the N lower faces (24) including two of the N nodes (38) and comprising two braces (52) forming an "X".

12. The installation (10; 100) according to any one of claims 1 to 11, wherein the monopile (14) is fixed to the support (28) and/or to the upper collar (34).

13. A process of building an installation (10; 100) as described by any one of claims 1 to 12 in a construction site, comprising:
- submerging the jacket structure (16) in the body of water (18) at the construction site, the N outer supports (24) lying on or being anchored in the seabed (26),
- introducing the monopile (14) in the upper collar (34), and moving the monopile (14) vertically with respect to the upper collar (34) until the lower extremity (30) is vertically received in the support (28), the lower collar (32) surrounding the lower extremity (30) around the vertical direction (V) and the lower extremity (30) being supported by the support (28), and
- fixing the wind turbine (12) to the monopile (14).

14. The process according to claim 13, comprising fixing the monopile (14) to the support (28) and/or to the upper collar (34).

15. The process according to claim 13 or 14, comprising:
- inserting a ballast material (58) in the outer supports (24), and/or
- inserting a ballast material (64) in N tubes (40) of the jacket structure (16) respectively protruding upwards from the N outer supports (24).
